# EUROPEAN PATENT SPECIFICATION

(11) **EP 2 458 370 B1**
(45) Date of publication and mention of the grant of the patent: **20.01.2016**
(21) Application number: 11191383.6
(22) Date of filing: 30.11.2011
(51) Int. Cl.: G01N 21/64, G01N 21/77, B65D 41/02

(54) **Method and device for measuring the oxygen content in sparkling wine bottles**
Verfahren und Vorrichtung zur Messung des Sauerstoffgehalts in Schaumweinflaschen
Procédé et dispositif de mesure de contenu en oxygène dans les bouteilles de vin pétillant

(30) Priority: 30.11.2010 EP 10193121
(43) Date of publication of application: 30.05.2012
(73) Proprietor: Nomacorc LLC, Zebulon, NC 27597 (US)
(72) Inventor: Aagaard, Olav Marcus, 305 1HX Rotterdam (NL); Sciacchitano, Jérôme Angelo, 67720 Hoerdt (FR); Durkin, James S., Wake Forest, NC 27587 (US)
(74) Representative: Cohausz & Florack

(56) References cited:
- WO-A2-02/33404
- US-A- 4 511 052
- US-A1- 2004 076 946
- US-A1- 2004 253 716
- US-A1- 2006 144 811
- US-A1- 2008 272 085
- PREVIATI M ET AL: "Oxygen consumption in Mediterranean octocorals under different temperatures", JOURNAL OF EXPERIMENTAL MARINE BIOLOGY AND ECOLOGY, AMSTERDAM, NL, vol. 390, no. 1, 15 July 2010 (2010-07-15) , pages 39-48, XP027078371, ISSN: 0022-0981, DOI: 10.1016/J.JEMBE.2010.04.025 [retrieved on 2010-05-21]
- LABUSCHAGNE P W ET AL: "Improved oxygen barrier performance of poly(vinyl alcohol) films through hydrogen bond complex with poly(methyl vinyl ether-co-maleic acid)", EUROPEAN POLYMER JOURNAL, PERGAMON PRESS LTD. OXFORD, GB, vol. 44, no. 7, 1 July 2008 (2008-07-01), pages 2146-2152, XP022853374, ISSN: 0014-3057, DOI: 10.1016/J.EURPOLYMJ.2008.04.015 [retrieved on 2008-04-13]
- BILLERBECK ET AL: "Benthic photosynthesis in submerged Wadden Sea intertidal flats", ESTUARINE, COASTAL AND SHELF SCIENCE, NEW YORK, NY, US, vol. 71, no. 3-4, 20 January 2007 (2007-01-20), pages 704-716, XP005736026, ISSN: 0272-7714, DOI: 10.1016/J.ECSS.2006.09.019

## Description

The invention relates to a detachable closure for a fluid container, a method for producing a detachable closure for a fluid container and a method for measuring the oxygen content in a fluid container.

There are many situations in which it is important to determine the oxygen content of a particular fluid in a container or - if the same substance is present within the container in both a liquid and a gaseous phase - of the oxygen content of the liquid phase and the gaseous phase. One particular such situation arises in the case of alcoholic beverages, in particular wine.

In the development of vintages, oxygen plays a critical role. About 6 % of all wines are negatively impacted by wine faults. More than 50 % of these wine faults are directly related to oxygen mismanagement, primarily oxidation (when wine is exposed to too much oxygen) and reduction (when wine does not receive enough oxygen).
Thus, it is very important to properly control both the concentration of oxygen dissolved in the wine as well as the concentration of gaseous oxygen around the wine, e.g. in the headspace of a bottle, during and after bottling the wine and storing the bottle.

From the prior art it is known to measure the oxygen content in fluids using luminescence-based oxygen sensors. These sensors comprise a photoactive chemical compound, for example Ruthenium complexes. Such a chemical compound has a certain fluorescence which is quenched, i.e. decreased, in the presence of oxygen. The principal interrelation between the luminescence and the oxygen concentration is given by the Stern-Volmer relationship. Basically, such a sensor with the chemical compound is placed in the environment of which the oxygen value is to be measured. Light of a particular frequency composition is then shined on the sensor by a probe and the resultant fluorescence of the sensor measured. Based on the known relationship between luminescence and oxygen concentration, the oxygen concentration in the ambient environment of the sensor can then be calculated.

From the prior art it is also known to apply this technology to bottled wine. This is usually done one of two ways: Either a sensor dot is placed inside the bottle, for example attached to a side wall of the bottle. A probe could then shine the light through the wall of the bottle on the sensor, as described above, and measure its fluorescence. The alternative is to open the bottle and invasively insert a sensor into the wine. However, both these methods have associated problems. Reliably arranging the sensor on the inside of the bottle wall would be difficult to do either for a private consumer or, for example, in a restaurant or hotel without the benefit of appropriate machinery. Moreover, this method also presupposes that the bottle wall (or other similar container) provides sufficient transparency to pass the optical signal in both directions. It would not be possible for a bag-in-box arrangement, which is for example often the preferred packaging of wine in restaurants. On the other hand, the invasive measurement necessitates opening the bottle or container every time a measurement is desired. However, opening the container in and of itself causes a change in the oxygen environment to be measured and is therefore usually undesirable.

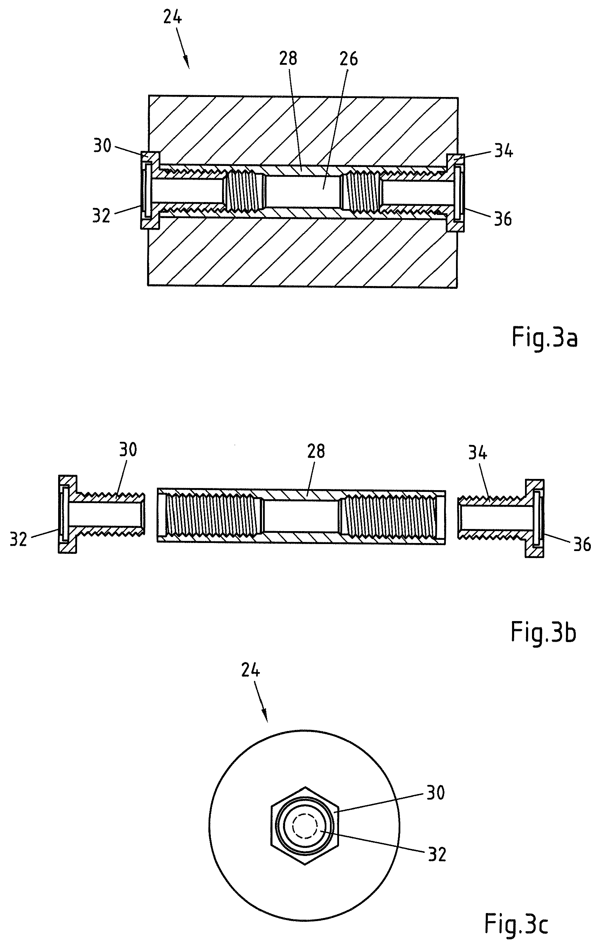

US 2008/272085 A1 (Figs. 3-4, 6; [0007]-[0012]; [0029]-[0033]) discloses ([0002]) a bottle stopper (claim 1 - detachable closure) of e.g. an elastomeric material for wine bottles (claim 1 - fluid container) functioning as a bung which ([0029]) unlike most rubber bungs (which are solid) has instead a lower portion 2 which is tubular (see Fig. 3) an which hangs downwardly from an upper portion 3 of the bottle stopper. The bottle stopper houses an oxygen scavenging medium 17 to absorb/scavenge any oxygen within the atmosphere inside the bottle. The internal space beneath the domed cap 10 defines an uppermost chamber 5 which houses an oxygen level indicating tablet 6 (claim 1 - oxygen sensor) which is supported over the opening that communicates with the chamber 4 of the mid-section 9 by an annular or mesh-form plate 11 ([0031]). The domed cap 10 is transparent, or at least has a window, to enable viewing of the oxygen level indicating tablet 6 for monitoring of the oxygen level within the bottle stopper/bottle whereby change of colour of the tablet 6 demonstrates to the user that the oxygen scavenging medium 17 has performed its function and reduced the oxygen level below a desired threshold.

Therefore the object of the present invention was to provide a means which enables an easy and more versatile measurement of the oxygen content of fluids in a container. Furthermore a method for producing such detachable closure and a method for measuring the oxygen content of a fluid contained in a container should be provided.

With regard to the detachable closure this object is solved with a detachable closure for a fluid container according to claim 1.

With regard to the method for measuring the oxygen content in a fluid container the aforesaid object is solved by the method defined in claim 7.

With regard to the method for producing a detachable closure for a fluid container the aforesaid object is solve by the method defined in claim 10.

Advantageous embodiments of the invention are specified in the dependent claims and will, like the general concept of the invention, be explained in detail below.

A detachable closure for a fluid container according to the invention comprises an oxygen sensor arranged to be exposed to an inner volume of the fluid container.

Thereby all the functionality of a conventional closure is retained and, in addition, a path for non-invasive measurement is introduced. In case the fluid container contains both a liquid and a gaseous phase, the invention permits measuring both the amount of gaseous oxygen in the (gaseous) headspace of the fluid container as well as the oxygen dissolved in the liquid phase.

The idea is to use that part of the fluid container for the insertion of the oxygen sensor which is meant to be removed and re-attached anyway, namely the closure of the container. Either an existing closure may be re-used and modified to produce a closure according to the invention or such an inventive closure may be specifically designed and manufactured. Therefore for any conventional fluid container, at most the closure needs to be modified or replaced, which is more easily done than making any modifications to the fluid container itself.

In the case where the fluid container is standardized in any way - which may apply for example to all bottles for a particular product or from a specific brand - only a few closures according to the invention may be necessary which can then be reused for any number of these fluid containers. Moreover, the invention is robust enough for cases in which there is high internal pressure within the fluid container, since it does not detract from the functionality of the closure used in such a high internal pressure situation in the first place.

In the context of the invention, the fluid container may be any containment device for a fluid, for example a bottle, a vat, a barrel or a bag-in-box container.

The fluid may in turn be any gaseous, liquid substance or combination thereof. In particular, the fluid may be any beverage, for example wine or sparkling wine, like champagne.

The detachable closure may be any means for variably opening and closing the container to fluid flow, for example a stopper, a tap, a plug or a cover.

The oxygen sensor may be any apparatus which reacts depending on the presence or absence of oxygen and may operate according to any chemical or physical principle of sensing.

The oxygen sensor may communicate its reaction to the oxygen content in any way with a separate measurement device configured to register the oxygen sensor's reaction to the oxygen content, for example by means of an electrical transmission, an optical transmission or a radio transmission.

An inner volume of the fluid container is equivalent to the inside of the fluid container, i.e. a volume enclosed by the fluid container when the detachable closure is attached to the fluid container.

The sensor is arranged on the detachable closure such that when the detachable closure is attached to the fluid container and thereby closes the fluid container, the sensor is in contact with the inner volume enclosed by the fluid container.

The oxygen sensor comprises a luminescence-based oxygen sensor. A luminescence-based oxygen sensor is any sensor which is based on the effect that oxygen in the environment of the sensor influences the luminescence of the sensor. In particular, the luminescence emitted by the sensor may be the result of incident light on the sensor and may for example be given by the Stern-Volmer equation. This equation permits, on the one hand, a very precise measurement of the oxygen content in the ambient environment of the sensor. On the other hand, a measuring device for calculating the oxygen content only has to receive the light which is directly emitted by the oxygen sensor as the result of a chemical reaction. Therefore such an oxygen sensor requires neither a power source, nor complex electronics nor a dedicated electrical conductor for transmission of the sensor's reaction to the ambient oxygen content.

The detachable closure comprises a signal path for the oxygen sensor This signal path may comprise an optical fiber cable.

The signal path comprises at least one through-hole for connecting the outside to the inside of the fluid container. Such a through-hole may be any bore or tunnel, not necessarily straight or of any particular dimensions, which provides a path from the outside to the inside of the container. In particular, such a through-hole may be curved or bent and may have a non-uniform cross-section. Such a through-hole may both serve in and of itself as a signal path for a signal emitted by the oxygen sensor, since e.g. optical signals or radio signals can traverse air without difficulty. Such a through-hole may also receive at times of measurement a dedicated signal conductor by insertion, for example an optical conductor

The through-hole may be drilled drilled into a conventional detachable closure in order to produce a detachable closure according to the invention. The detachable closure comprises plugging means arranged to cover an opening of the through-hole, the plugging means comprising the oxygen sensor. The method comprises covering an opening of the at least one through-hole with a plugging means comprising an oxygen sensor.

By arranging the oxygen sensor at the point where the closure borders on the interior of the container, both contact of the oxygen sensor to the environment to be tested - i.e. said interior of the container - as well as an unimpaired sealing effect of the closure is ensured.

Since the oxygen sensor is a luminescence-based oxygen sensor, such a through-hole provides a way to send light to the oxygen sensor and receive luminescence from the oxygen sensor without the need for the light to pass any intermediary material, such as the actual walls of the container. Thus the sensor is placed in a location where, on the one hand, it is exposed to the ambient environment to be measured and, on the other hand, it can receive light from the outside. Simultaneously, the tightness of the closure is not compromised.

Since the light used for the measurement is transmitted through the closure, as a further advantage this also obviates, the need for transmitting light through the material of the container proper. For some containers, sending light through the container wall is not possible anyway, for example bag-in-box liquid containers, in which case the invention permits a non-invasive measuring of oxygen content which was not available before. But even in cases where the container wall is in principle transparent, the container wall may have optical properties that make a measurement more difficult. This applies, for example, to bottles that are tinted to reduce light exposure of the beverage within. Here also the invention permits a measurement unaffected by the properties of the bottle wall.

The plugging means may be any structure which seals off an opening of a through-hole. The oxygen sensor is further arranged on the plugging means such that the combined structure of the plugging means and the oxygen sensor tightly seals the opening of such a through-hole when it covers the opening of the through-hole. Therefore the plugging means, either by itself or together with the oxygen sensor, prevents fluid flow through the through-hole of the detachable closure in either direction when and as long as it is covering the opening of the through-hole.

A light guide may be inserted into such a through-hole in order to improve the transmission of light to and from the oxygen sensor. Such a light guide is inserted from the opening of the through-hole facing the outside the container, i.e. the opening of the through-hole which is opposite to the opening covered by the plugging means comprising the oxygen sensor. The light guide may for example be a fiber optic cable. In order to facilitate the insertion of the light guide into the through-hole, the detachable closure comprises a sleeve arranged within the through hole and configured to receive the plugging means. The sleeve may be arranged only partially in the through-hole and may therefore also extend beyond and outside the through-hole. This sleeve also provides a preferred mechanism for attaching the plugging means such that the through-hole opening is tightly closed.

The sleeve may be any structure providing a lining to portions or the entirety of the through-hole. The sleeve may consist of any plastic material. In particular, the sleeve may substantially consist of nylon. The sleeve may equally consist of metal, for example stainless steel.

The method for producing a detachable closure for a fluid container comprises inserting a sleeve into the through-hole, which sleeve is configured to receive the plugging means, and wherein covering an opening of the through-hole with the plugging means comprises inserting the plugging means into the sleeve. Also here the sleeve may only be partially inserted into the through-hole.

The detachable closure may be elastic. In some such cases, the detachable closure is wider than the opening of the fluid container which it is to close and may need to be laterally compressed for insertion, thereafter extending again to ensure a tight seal of the fluid container. In order to preserve the structural integrity of the sleeve when the detachable closure is thus compressed, in a preferred embodiment of the invention the sleeve is shorter than the through-hole.

To further improve the tight sealing of the fluid container and prevent an inadvertent displacement of the sleeve, the sleeve is glued in place in the through-hole in a preferred embodiment of the invention.

Ideally, the glue used for the sleeve is not only suitable for fixing the sleeve in its place within the through-hole and ensuring a tight seal to prevent leakage of the fluid within the container, but also provides long-term resilience against dissolution or etching by the kinds of fluids that could be stored in the fluid container. For the case that the fluid in the container is a beverage, the glue should adhere to the correct food contact compliancy. In particular when the fluid container is used for storing any kind of still wine or sparkling wine, any effect of the glue on coloring, taste, smell of the still wine or sparkling wine is undesirable. It has been found that glue based on vulcanization silicone, in particular glue based on room-temperature vulcanization silicone, combines these advantageous properties. Therefore in a preferred embodiment of the invention, the sleeve is glued in place in the through-hole by means of vulcanization silicone, in particular room-temperature vulcanization silicone.

Especially in the case when the detachable closure is to be re-used successively for different fluid containers, it may be desirable to both ensure a tight sealing fit of the plugging means on the opening of the through-hole and provide the option of detaching and re-attaching the plugging means to the sleeve. To this end, in a preferred embodiment of the detachable closure the sleeve comprises internal threads at at least one end and the plugging means is a fitting comprising threads corresponding to the internal threads of the sleeve, the fitting being configured to be screwed into the sleeve.

In a preferred embodiment of the method for producing a detachable closure for a fluid container, inserting the plugging means into the sleeve comprises screwing the plugging means into the sleeve.

When the detachable closure for a particular fluid container does not have a preferred direction with regard to which end should be facing the inside of the fluid container and which end should be facing the outside of the fluid container, it is desirable to also retain this versatility for the detachable closure according to the invention. For example, still wine corcs in general do not have a preferred direction, because they are essentially cylindrical in shape and may therefore be used with either end facing the inside of the bottle. In contrast, champagne corcs are generally mushroom-shaped and can therefore only be used with the wider end facing outward. Therefore a preferred embodiment of the detachable closure comprises a second plugging means arranged to cover an additional opening of the through-hole, the second plugging means comprising a second oxygen sensor.

Such a detachable closure can be used to close the fluid container without having to pay attention as to whether the end of the detachable closure with the oxygen sensor is facing the inside of the fluid container. When a measurement of the oxygen is desired, the plugging means on the outside of the fluid container can simply be removed from the detachable closure and re-attached after completion of the measurement. The second oxygen sensor may be identical to the first oxygen sensor in all respects.

The second oxygen sensor may also be different from the first oxygen sensor either in its principle of operation or in some other respect. In the case of a luminescence-based oxygen sensor, it may for example comprise a different chemical complex. Therefore the detachable closure may be used with a respective different side facing inside depending on the exact kind of measurement to be made within the fluid container.

A corresponding preferred embodiment of the method for producing a detachable closure for a fluid container comprises covering an additional opening of the through-hole with a second plugging means comprising an oxygen sensor.

In a preferred embodiment of the invention, the detachable closure is a corc for sealing a bottle. Corcs are commonly used as bungs for wine bottles and remain popular with consumers. Because of their softness, they are very well suited to provide the basis for a detachable closure according to the invention. Moreover, the fact that the required dimensions of the corc are nearly identical for all or at least many kinds of bottles of wine makes reusing a detachable closure according to the invention which is a corc very easy.

A method for measuring the oxygen content in a fluid container according to the invention comprises the following steps: inserting a detachable closure formed according to the invention into an opening of the fluid container and receiving a signal from the oxygen sensor by a measuring means.

The measuring means may be any apparatus suitable for receiving an appropriate signal from the oxygen sensor which is indicative of the oxygen content detected by the oxygen sensor. In particular, the measuring means may be an apparatus configured to process and communicate the oxygen content which is associated with the signal sent by the oxygen sensor. For example, the measuring means may comprise circuitry or software to determine the oxygen content based on the intensity of the signal received by the oxygen sensor when the intensity of the signal received is associated with a particular oxygen content based on a known equation.

In a preferred embodiment the method for measuring the oxygen content in a fluid container, wherein the oxygen sensor comprises a luminescence-based oxygen sensor, receiving a signal from the oxygen sensor comprises receiving light from the oxygen sensor via a means for optical transmission.

Since the oxygen sensor may be advantageously activated by being exposed to a light source, in a preferred embodiment of the method for measuring the oxygen content in a fluid container light is sent to the oxygen sensor via the means for optical transmission.

A more precise measurement of the oxygen content may be enabled if the light is transmitted from and to the oxygen sensor by means of a dedicated optical conductor that directly contacts the oxygen sensor via a through-hole of the detachable closure. Therefore a preferred embodiment of the method for measuring the oxygen content in a fluid container comprises inserting the means for optical transmission into a proximal opening of a through-hole of the detachable closure.

In the following, the invention is discussed further with reference to various embodiments which are illustrated in the figures.
- Fig. 1: illustrates the principle according to which the oxygen content is measured according to the invention;
- Fig. 2a-c: illustrate a sparkling wine corc corresponding to a first embodiment of the invention;
- Fig. 3a-c: illustrate a still wine corc corresponding to a second embodiment of the invention;
- Fig.4a-b: illustrate a spout for a bag-in-box corresponding to a third embodiment of the invention.

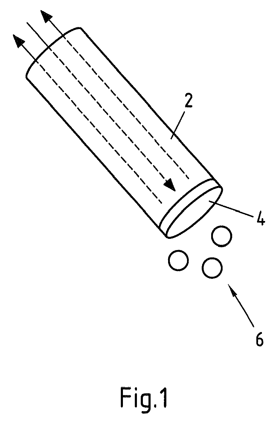

Fig. 1 illustrates the underlying mechanism for measuring oxygen content which is used in the invention. A fiber-optic cable 2 has at its one tip a sensor foil 4 comprising a photoactive chemical compound, for example Ruthenium complexes. The sensor foil 4 is in contact with an ambient environment 6 comprising a certain concentration of oxygen. At the far end of the fiber-optic cable 2 there is a light emitter and an analyzer (both not shown).

In order to measure the oxygen concentration in the ambient environment 6, light with specific properties is transmitted via the fiber optic cable 2 to the sensor foil 4. Depending on the amount of oxygen in the ambient environment 6 and on the properties, such as the luminescence and spectral composition, of the light received by the sensor foil 4, light of a particular luminescence is in turn emitted by the sensor foil 4. This light is transmitted back to the analyzer by the fiber optic cable 2. The Stern-Volmer equation describes the luminescence of the light emitted by the sensor foil 4 as a function of the oxygen concentration of the ambient environment 6 of the sensor foil 4. Thereby, the analyzer at the far end of the fiber optic cable 2 from the sensor foil 4 is able to determine the oxygen concentration of the ambient environment 6 of the sensor foil 4.

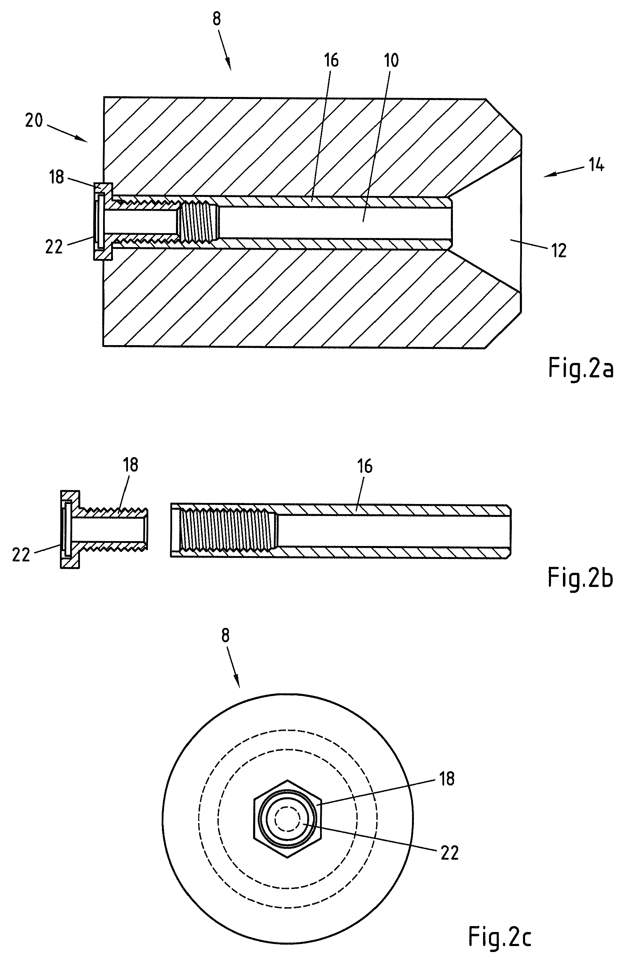

Fig. 2a-c illustrate a sparkling wine corc 8 corresponding to a first embodiment of the invention. The illustrated sparkling wine corc 8 is a detachable closure for a sparkling wine bottle. The sparkling wine corc 8 comprises a through-hole 10 arranged on the longitudinal axis of the sparkling wine corc 8. The through-hole 10 has been drilled into the sparkling wine corc 8 and ends in a conical aperture 12 at an upper end 14 of the sparkling wine corc 8. A threaded tube 16, presenting a sleeve, is arranged in the through-hole 10 and has been glued in place using room-temperature vulcanization silicone.

Room-temperature vulcanization silicone has been determined as a preferred adhesive for gluing into place the threaded tube 16 based on tests of several different kinds of adhesives. In particular, the following kinds of room-temperature vulcanization silicones have been found to be especially suitable as adhesives: E-43 by Wacker, 786, 737 and SU5005 by Dow Corning, AG-300 by InTek, RTV-118 by GE and RTV-4500 by Sil-Bond. Of these, E-43 by Wacker exhibited particularly good clarity.

Other kinds of adhesives that may be used comprise pressure-sensitive adhesives, for example 2-sided tape by U-Glue, Hot Melt, which includes EFD-FDA hot melt by Nordson and medical cyanoacrylate, e.g. 4541 by Loctite.

Further, also the following kinds of adhesives may be used:
- Two-part Epoxy, such as NGAC P907-26 and NGAC M907 by NEXTgen Adhesives and 20-3602 by Epoxies Etc.
- Wood Glue, for example Titebond III or Gorilla glue.
- Other glues, such as COX-643 by Cox Adhesive Sales, C-320 with hardener by Rema TipTop and MP-53037 or MP-53024 by ASI Adhesives.

In addition, a primer may be used to enhance the adhesive bond. A suitable primer would be, for example, the SS4179 silicone primer for use with one and two component room-temperature vulcanization silicone adhesive sealants by GE.

Going back to the sparkling wine corc 8 corresponding to a first embodiment of the invention and illustrated in Fig. 2a-c, the threaded tube 16 consists of nylon but may equally be replaced by a threaded tube consisting of metal. The threads of the threaded tube 16 do not span the entire length of the threaded tube 16, but are formed near the end of the threaded tube 16 corresponding to a lower end 20 of the sparkling wine corc 8.

A hollow fitting 18 made of metal with a threading corresponding to that of the threaded tube 16 has been screwed into the threaded tube 16 at the lower end 20 of the sparkling wine corc 8. The fitting 18 therefore presents a plugging means for covering an opening of the through-hole 10. The fitting 18 has glued to its center a luminescence-based oxygen sensor dot 22 comprising Ruthenium complexes.

The sparkling wine corc 8 can now be used to close a sparkling wine bottle, like any regular corc, by inserting the sparkling wine corc 8 with the lower end 20 first in the neck of the sparkling wine bottle. To this end it may be necessary to squeeze the elastic sparkling wine corc 8 to a certain degree in order to insert in into the neck of the sparkling wine bottle. The conical aperture 12 permits a corresponding deformation of the sparkling wine corc 8 without jeopardizing the hold of the threaded tube 16 glued in the through-hole 10. Thus inserted, the sensor dot 22 is facing the inside of the sparkling wine bottle and is correspondingly both exposed to an inner volume of the and in contact with either the gaseous phase in the sparkling wine bottle, if the sparkling wine bottle is standing up, or alternatively, in contact with the liquid phase, e.g. the sparkling wine itself, if for example the sparkling wine bottle is tilted.

The oxygen content of the ambient environment of the sensor dot 22, i.e. the gaseous phase in the sparkling wine bottle or the sparkling wine itself, can now be measured using the underlying mechanism as described with regard to Fig. 1. A fiber optic cable, presenting a means for optical transmission, is inserted from the upper end 14 of the sparkling wine corc 8 into the threaded tube 16 and all the way to the sensor dot 22. Light with the appropriate properties is transmitted to the sensor dot 22 via the fiber optic cable, and the light emitted by the sensor dot 22 in response is transmitted back via the fiber optic cable and further measured and analyzed by a measuring means, which in this case is an appropriate device connected to the fiber optic cable. From the luminescence of the light received, the oxygen content either of the gaseous phase or the liquid phase in the sparkling wine bottle can be determined without having to open the closure of the bottle provided by the sparkling wine corc 8.

Fig. 3a-c illustrate a still wine corc 24 corresponding to a second embodiment of the invention. The still wine corc 24 comprises a through-hole 26 with a threaded tube 28, which consists of nylon but may equally be made of metal, and a hollow first fitting 30 made of metal screwed into the threaded tube 28. The first fitting 30 comprises a first sensor dot 32. These components correspond to the corresponding features of the first embodiment described with reference Fig. 2a-c.

The second embodiment illustrated in Fig. 3a-c differs from the first embodiment in that the still wine corc 24 does not have a conical aperture at one end. Instead, the through-hole 26 and the threaded tube 28 extend over the entire length of the still wine corc 24. The threaded tube 28 has a threading near both its ends but is without threading in the center.

Further, the still wine corc 24 comprises a second fitting 34 with a second sensor dot 36. The second fitting 34 is screwed into the threaded tube 28 opposite to the first fitting 30. The second fitting 34 with its second sensor dot 36 is otherwise identical to the first fitting 30 and its first sensor dot 32.

The still wine corc 24 can now be used to close a still wine bottle like any conventional still wine corc. Since the still wine corc 24 is symmetrical to rotation by 180 degrees, it does not matter with which end first it is inserted into the neck of a still wine bottle.

In order to measure the oxygen content within the still wine bottle as already described for the first embodiment with regard to Fig.2a-c, the respective fitting facing the outside of the still wine bottle is screwed off. This may be the first fitting 30 or the second fitting 34 depending on which end of the still wine corc 24 was inserted into the neck of the bottle. Once the respective fitting is screwed off, a fiber optic cable can be inserted into the threaded tube 28 and the oxygen content measured as already described with regard to the first embodiment and Fig. 2a-c using the sensor dot on the remaining fitting. After the measurement is complete, the fitting that was screwed off is screwed back into the threaded tube 28.

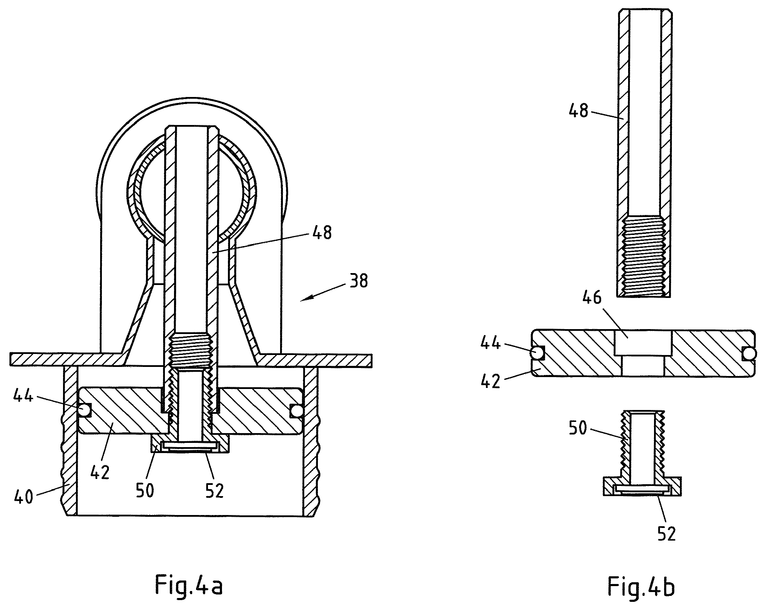

Fig. 4a-b illustrate a spout 38 for a bag-in-box corresponding to a third embodiment of the invention. The spout 38 is used to close the opening of a bag-in-box and therefore presents a detachable closure for the container that is the bag-in-box. Bag-in-box constructions are well-known in the art for storing various kinds of beverages, including wine. The spout 38 comprises a tubular section 40 for insertion into an opening of the bag-in-box. The tubular section presents the lower end of the spout 38. Within the tubular section 40, there is a plug 42, made of acrylic or delrin, with an o-ring 44 arranged circumferentially around it to ensure that it seals the tubular section 40.

The plug 42 has a central opening or through-hole 46 within which the end of a threaded tube 48 is arranged. The threaded tube 48 is threaded near its end facing the through-hole 46 and thereby in the direction of the inside of the bag-in-box. The other end of the threaded tube 48 consequently faces the outside of the bag-in-box.

A fitting 50 comprising a sensor dot 52 is screwed into the threaded tube 46 at the side of the threaded tube facing inside the bag-in-box via the through-hole 44. The fitting 50 thereby presents plugging means for covering the opening of the through-hole 46.

The threaded tube 48 corresponds to the threaded tube 16 of the first embodiment described with reference to Fig. 2a-c and the fitting 50 with its sensor dot 52 corresponds to the fittings 18, 30, 34 with their respective sensor dots 22, 32, 36 described for the first and second embodiments with reference to Fig. 2a-c and Fig. 3a-c.

The oxygen content within the bag-in-box may now be measured without removing or opening the spout 38 by inserting a fiber optic cable, presenting means for optical transmission, into the threaded tube 48 and proceeding as described for Fig. 2a-c.

### REFERENCE SIGNS

- 2: fiber-optic cable
- 4: sensor foil at tip of fiber-optic cable 2
- 6: ambient environment of sensor foil 4 comprising oxygen
- 8: sparkling wine corc
- 10: through-hole drilled through sparkling wine corc 8
- 12: conical aperture of sparkling wine corc 8
- 14: upper end of sparkling wine corc 8
- 16: threaded tube
- 18: fitting screwed into threaded tube 16
- 20: lower end of sparkling wine corc 8
- 22: sensor dot glued to fitting 18
- 24: still wine corc
- 26: through-hole drilled through still wine corc 24
- 28: threaded tube
- 30: first fitting screwed into threaded tube 28
- 32: first sensor dot glued to first fitting 30
- 34: second fitting screwed into threaded tube 28
- 36: second sensor dot glued to second fitting 34
- 38: spout for a bag-in-box
- 40: tubular section of spout 38
- 42: plug sealing the tubular section 40
- 44: o-ring around plug 42
- 46: through-hole through plug 42
- 48: threaded tube
- 50: fitting screwed into threaded tube 48
- 52: sensor dot glued to fitting 50

## Claims

1. A detachable closure (8, 24, 38) for a beverage container, said detachable closure (8, 24, 38) comprising an oxygen sensor (22, 32, 52) arranged to be exposed to an inner volume of the beverage container, wherein the oxygen sensor is a luminescence-based oxygen sensor (22, 32, 52), the detachable closure (8, 24, 38) comprising a signal path (10, 26, 46) for the luminescent output from the oxygen sensor (22, 32, 52),
wherein the signal path (10, 26, 46) comprises at least one through-hole (10, 26, 46) for connecting the outside of the fluid container to the inside of the fluid container via the closure in the absence of plugging means,
the detachable closure (8, 24, 38) comprising the plugging means (18, 30, 50) which are arranged to cover an opening of the through-hole (10, 26, 46), the plugging means (18, 30, 50) comprising the oxygen sensor (22, 32, 52), the detachable closure (8, 24, 38) further comprising a sleeve (16, 28, 48) arranged within the through-hole (10, 26, 46) and configured to receive the plugging means (18, 30, 50).

2. The detachable closure (8, 24, 38) according to claim 1, wherein the oxygen sensor (22, 32, 52) is arranged on or in a section of a surface of the detachable closure which is assigned to the inner volume of the fluid container.

3. The detachable closure (8, 24, 38) according to claim 1 or 2, wherein the sleeve (16) is shorter than the through-hole (10).

4. The detachable closure (8, 24, 38) according to anyone of claims 1 to 3, wherein:
- the sleeve (16, 28, 48) comprises internal threads at at least one end; and
- the plugging means (18, 30, 50) is a fitting comprising threads corresponding to the internal threads of the sleeve (16, 28, 48), the fitting being configured to be screwed into the sleeve (16, 28, 48).

5. The detachable closure (24) according to anyone of claims 1 to 4, further comprising a second plugging means (34) arranged to cover an additional opening of the through-hole (26), the second plugging means (34) comprising a second oxygen sensor (36).

6. The detachable closure according to anyone of the preceding claims, wherein the detachable closure is a cork (8, 24) for sealing a bottle.

7. A method for measuring the oxygen content in a fluid container comprising the following working steps:
- inserting a detachable closure (8, 24, 38) being formed in accordance with anyone of claims 1 to 6 into an opening of the fluid container; and
- receiving a signal from the oxygen sensor (22, 32, 52) by a measuring means.

8. The method of claim 7, wherein receiving a signal from the oxygen sensor (22, 32, 52) comprises receiving light from the oxygen sensor (22,32,52) via a means for optical transmission.

9. The method of claim 12, wherein light is sent to the oxygen sensor (22, 32, 52) via the means for optical transmission.

10. A method for producing a detachable closure (8, 24, 38) for a fluid container, the closure being according to any one of claims 1 to 6, the method comprising inserting a sleeve into the through hole of the closure, which sleeve is configured to receive the plugging means, and wherein covering an opening of the through hole with the plugging means comprises inserting the plugging means into the sleeve, and attaching an oxygen sensor (22, 32, 52) to the detachable closure (8, 24, 38) such that it is arranged to be exposed to an inner volume of the fluid container.

## Patentansprüche

1. Abnehmbarer Verschluss (8, 24, 38) für einen Getränkebehälter, wobei der abnehmbare Verschluss (8, 24, 38) einen Sauerstoffsensor (22, 32, 52) umfasst, der so angeordnet ist, dass er einem Innenvolumen des Getränkebehälters ausgesetzt ist, wobei der Sauerstoffsensor ein auf Lumineszenz basierender Sauerstoffsensor (22, 32, 52) ist, wobei der abnehmbare Verschluss (8, 24, 28) einen Signalpfad (10, 26, 46) für die Lumineszenzausgabe von dem Sauerstoffsensor (22, 32, 52) umfasst, wobei der Signalpfad (10, 26, 46) mindestens ein Durchgangsloch (10, 26, 46) zur Verbindung der Außenseite des Fluidbehälters mit der Innenseite des Fluidbehälters über den Verschluss bei Fehlen von Stopfenmitteln umfasst, wobei der abnehmbare Verschluss (8, 24, 28) die Stopfenmittel (18, 30, 50) umfasst, die zum Abdecken einer Öffnung des Durchgangslochs (10, 26, 46) angeordnet sind, wobei die Stopfenmittel (18, 30, 50) den Sauerstoffsensor (22, 32, 52) umfassen, wobei der abnehmbare Verschluss (8, 24, 38) ferner eine Hülse (16, 28, 48) umfasst, die in dem Durchgangsloch (10, 26, 46) angeordnet und zur Aufnahme der Stopfenmittel (18, 30, 50) konfiguriert ist.

2. Abnehmbarer Verschluss (8, 24, 38) nach Anspruch 1, wobei der Sauerstoffsensor (22, 32, 52) an oder in einem Abschnitt einer Oberfläche des abnehmbaren Verschlusses angeordnet ist, die dem Innenvolumen des Fluidbehälters zugeordnet ist.

3. Abnehmbarer Verschluss (8, 24, 38) nach Anspruch 1 oder 2, wobei die Hülse (16) kürzer ist als das Durchgangsloch (10).

4. Abnehmbarer Verschluss (8, 24, 38) nach einem der Ansprüche 1 bis 3, wobei:
- die Hülse (16, 28, 48) an mindestens einem Ende ein Innengewinde umfasst; und
- das Stopfenmittel (18, 30, 50) ein Fitting ist, das ein Gewinde umfasst, das dem Innengewinde der Hülse (16, 28, 48) entspricht, wobei das Fitting zum Einschrauben in die Hülse (16, 28, 48) konfiguriert ist.

5. Abnehmbarer Verschluss (24) nach einem der Ansprüche 1 bis 4, ferner umfassend ein zweites Stopfenmittel (34), das zum Abdecken einer zusätzlichen Öffnung des Durchgangslochs (26) angeordnet ist, wobei das zweite Stopfenmittel (34) einen zweiten Sauerstoffsensor (36) umfasst.

6. Abnehmbarer Verschluss nach einem der vorhergehenden Ansprüche, wobei der abnehmbare Verschluss ein Korken (8, 24) zum Abdichten einer Flasche ist.

7. Verfahren zum Messen des Sauerstoffgehalts in einem Fluidbehälter, umfassend die folgenden Arbeitsschritte:
- Einführen eines gemäß einem der Ansprüche 1 bis 6 ausgebildeten abnehmbaren Verschlusses (8, 24, 38) in eine Öffnung des Fluidbehälters; und
- Empfangen eines Signals von dem Sauerstoffsensor (22, 32, 52) durch ein Messmittel.

8. Verfahren nach Anspruch 7, wobei das Empfangen eines Signals von dem Sauerstoffsensor (22, 32, 52) Empfangen von Licht von dem Sauerstoffsensor (22, 32, 52) über ein Mittel zur optischen Übertragung umfasst.

9. Verfahren nach Anspruch 12, wobei das Licht über das Mittel zur optischen Übertragung zu dem Sauerstoffsensor (22, 32, 52) gesendet wird.

10. Verfahren zur Herstellung eines abnehmbaren Verschlusses (8, 24, 38) für einen Fluidbehälter, wobei der Verschluss einem der Ansprüche 1 bis 6 entspricht, wobei das Verfahren Einführen einer Hülse in das Durchgangsloch des Verschlusses umfasst, wobei die Hülse zur Aufnahme des Stopfenmittels konfiguriert ist und wobei Abdecken einer Öffnung des Durchgangslochs mit dem Stopfenmittel Einführen des Stopfenmittels in die Hülse und Befestigen eines Sauerstoffsensors (22, 32, 52) an dem abnehmbaren Verschluss (8, 24, 28) derart, dass er so angeordnet wird, dass er einem Innenvolumen des Fluidbehälters ausgesetzt ist, umfasst.

## Revendications

1. Fermeture amovible (8, 24, 38) pour un récipient pour boissons, ladite fermeture amovible (8, 24, 38) comprenant un détecteur d'oxygène (22, 32, 52) agencé de manière à être exposé à un volume interne du récipient pour boissons, le détecteur d'oxygène étant un détecteur d'oxygène basé sur la luminescence (22, 32, 52), la fermeture amovible (8, 24, 38) comprenant un trajet de signal (10, 26, 46) pour la sortie luminescente provenant du détecteur d'oxygène (22, 32, 52), le trajet de signal (10, 26, 46) comprenant au moins un trou traversant (10, 26, 46) pour la connexion de l'extérieur du récipient pour fluides à l'intérieur du récipient pour fluides par le biais de la fermeture en l'absence de moyens de bouchage, la fermeture amovible (8, 24, 38) comprenant les moyens de bouchage (18, 30, 50) qui sont agencés de manière à couvrir une ouverture du trou traversant (10, 26, 46), les moyens de bouchage (18, 30, 50) comprenant le détecteur d'oxygène (22, 32, 52), la fermeture amovible (8, 24, 38) comprenant en outre un manchon (16, 28, 48) agencé à l'intérieur du trou traversant (10, 26, 46) et configuré pour recevoir les moyens de bouchage (18, 30, 50).

2. Fermeture amovible (8, 24, 38) selon la revendication 1, dans laquelle le détecteur d'oxygène (22, 32, 52) est agencé sur ou dans une section d'une surface de la fermeture amovible qui est affectée au volume intérieur du récipient pour fluides.

3. Fermeture amovible (8, 24, 38) selon la revendication 1 ou 2, dans laquelle le manchon (16) est plus court que le trou traversant (10).

4. Fermeture amovible (8, 24, 38) selon l'une quelconque des revendications 1 à 3, dans laquelle
- le manchon (16, 28, 48) comprend des filets femelles à au moins une extrémité ; et
- les moyens de bouchage (18, 30, 50) sont constitués par un raccord comprenant des filets correspondant aux filets femelles du manchon (16, 28, 48), le raccord étant configuré pour être vissé dans le manchon (16, 28, 48).

5. Fermeture amovible (24) selon l'une quelconque des revendications 1 à 4, comprenant en outre un deuxième moyen de bouchage (34) agencé de manière à couvrir une ouverture supplémentaire du trou traversant (26), le deuxième moyen de bouchage (34) comprenant un deuxième détecteur d'oxygène (36) .

6. Fermeture amovible selon l'une quelconque des revendications précédentes, dans laquelle la fermeture amovible est un bouchon (8, 24) pour sceller une bouteille.

7. Procédé de mesure de la teneur en oxygène dans un récipient pour fluides comprenant les étapes de travail suivantes :
- insertion d'une fermeture amovible (8, 24, 38) formée selon l'une quelconque des revendications 1 à 6 dans une ouverture du récipient pour fluides ; et
- réception, par un moyen de mesure, d'un signal provenant du détecteur d'oxygène (22, 32, 52).

8. Procédé selon la revendication 7, dans lequel la réception d'un signal provenant du détecteur d'oxygène (22, 32, 52) comprend la réception de lumière provenant du détecteur d'oxygène (22, 32, 52) par le biais d'un moyen de transmission optique.

9. Procédé selon la revendication 12, dans lequel la lumière est envoyée au détecteur d'oxygène (22, 32, 52) par le biais du moyen de transmission optique.

10. Procédé de production d'une fermeture amovible (8, 24, 38) pour un récipient pour fluides, la fermeture étant conforme à l'une quelconque des revendications 1 à 6, le procédé comprenant l'insertion d'un manchon dans le trou traversant de la fermeture, lequel manchon est configuré pour recevoir les moyens de bouchage, et la couverture d'une ouverture du trou traversant par les moyens de bouchage comprenant l'insertion des moyens de bouchage dans le manchon, et la fixation d'un détecteur d'oxygène (22, 32, 52) à la fermeture amovible (8, 24, 38) de telle sorte qu'il soit agencé de manière à être exposé à un volume interne du récipient pour fluides.
